# EUROPÄISCHE PATENTSCHRIFT

(11) **EP 1 925 215 B1**
(45) Veröffentlichungstag und Bekanntmachung des Hinweises auf die Patenterteilung: **04.01.2012**
(21) Anmeldenummer: 06023906.8
(22) Anmeldetag: 17.11.2006
(51) Int. Cl.: A23L 1/39, A23L 1/40

(54) **Verfahren zur Herstellung eines fetthaltigen granulären Nahrungsmittelkonzentrats**
Process for the preparation of a fat containing granular food concentrate
Procédé pour la préparation d'un aliment concentré contenant du gras

(43) Veröffentlichungstag der Anmeldung: 28.05.2008
(73) Patentinhaber: Hügli Holding AG, 9323 Steinach (CH)
(72) Erfinder: Scharf, Karl, 74223 Flein (DE); Gotzmann, Albert, 78256 Steisslingen (DE)
(74) Vertreter: Geyer, Fehners & Partner

(56) Entgegenhaltungen:
- EP-A1- 0 981 970
- EP-A2- 0 954 985
- WO-A-98/20756
- WO-A-2006/063690
- DE-U1- 20 317 533
- US-B1- 6 500 426

## Beschreibung

Die Erfindung bezieht sich auf ein Verfahren zur Herstellung eines fetthaltigen granulären Nahrungsmittelkonzentrats, ein nach dem Verfahren erhältliches granuläres Nahrungsmittelkonzentrat und dessen Verwendung zur Herstellung eines Nahrungsmittelprodukts, insbesondere einer gebundenen Suppe oder einer Sauce.

Nahrungsmittelzusammensetzungen zur Herstellung von Suppen, Saucen und Fixprodukten werden dem Verbraucher in der Regel in Form von Pulvern oder Granulaten zur Verfügung gestellt, um eine leichte Dosierbarkeit und Handhabbarkeit sicherzustellen. Pulver bestehen in der Regel aus Partikeln, die deutlich kleiner als 1 mm sind. Diese haben jedoch den Nachteil, daß dann, wenn sie zur Verklumpung neigen, in der Regel große Mengen an Trennmitteln zugesetzt werden müssen. Daher haben sich Nahrungsmittelkonzentrate in Granulatform bewährt, die einen größeren Partikeldurchmesser aufweisen.

Üblicherweise werden Granulate über eine Partikelvergrößerung entweder durch Agglomeration oder Granulation hergestellt. Eine Agglomeration in diesem Sinne ist die Aufbauagglomeration, bei der ein Pulver in einem Fließbett mittels Aufsprühen von Fluiden, beispielsweise Wasser, wäßrigen Systemen, Dispersionen, Fett oder Öl als Haftvermittler eine Kornvergrößerung erfährt. Dies geschieht durch Verbinden der einzelnen Pulverpartikel, wobei sich in der Regel Feststoffbrücken ausbilden. Die Flüssigkeit löst entweder die Partikel des Pulvers selbst an oder sie liefert bereits gelöste Stoffe mit, beispielsweise Kohlenhydrate, wodurch die einzelnen Partikel aneinander haften können. Die Feststoffbrücken werden in einem sich anschließenden Trocknungsschritt ausgebildet. Dies geschieht in der Regel in mehreren Schritten, da die gebildeten Partikel immer erst neu stabilisiert werden müssen. Diese Vielstufigkeit der Aufbauagglomeration ist ein wesentlicher Verfahrensnachteil. Ferner ist in der Regel die erreichbare Partikelgröße begrenzt, da die Partikel aufgrund der mechanischen Belastung ab einer bestimmten Größe instabil werden und wieder auseinander brechen. Darüber hinaus sind Agglomerationsverfahren auch hinsichtlich der erhältlichen Form der Agglomerate begrenzt, da Agglomerate eine offene Struktur aufweisen, die auch als Brombeer-Form bezeichnet wird. Eine kompakte Form ist daher mit Hilfe der Agglomeration nicht zu erreichen.

Wenn als Fluide Öle oder niederschmelzende Fette eingesetzt werden, entstehen bei der Agglomeration keine sonderlich stabilen Teilchen, da durch die instabile Haftung nur eine gewisse Anzahl an Pulverpartikeln zusammen bleibt. Unter niederschmelzenden Fetten werden in der Regel Fette verstanden, die unterhalb der Körpertemperatur des Menschen schmelzen. Daher ist die Herstellung größerer Agglomerate nicht möglich. Bei der Verwendung von geschmolzenem Fett sind auch stabilere und damit größere Agglomerate herstellbar, hier besteht jedoch der Nachteil, daß die Verfahrensführung aufwendig wird, um mit dem geschmolzenen Fett arbeiten zu können. Auf Kohlenhydraten basierende Feststoffbrücken zwischen den Pulverpartikeln sind in der Regel stabiler.

Die Herstellung eines granulären Nahrungsmittelkonzentrats durch Agglomeration ohne die Verwendung von Fetten als Fluide bringt die Schwierigkeit mit sich, daß die Größe der erhältlichen Granulatteilchen (Agglomerate) schwer zu steuern ist, insbesondere wenn das Nahrungsmittelkonzentrat einen höheren Anteil an hygroskopischen Komponenten enthält, beispielsweise Hefeextrakt, so daß statt eines Granulats mit einer engen Größenverteilung große Klumpen resultieren können.

Im Unterschied dazu werden beim Granulieren, das in diesem Zusammenhang auch als Formgranulieren oder Extrudieren bezeichnet wird, die größeren Partikel des Granulats durch Extrudieren aus einem Pulver hergestellt.

Jedes dieser Verfahren hat seine Grenzen, wodurch nur bestimmte Produktgruppen durch das jeweilige Verfahren hergestellt werden können. Die Unterschiede liegen unter anderem in der Stabilität und Form der erhältlichen Granulatteilchen und dem einsetzbaren fluiden Haftvermittler.

Wenn mit Hilfe der Formgranulation ein granuläres Nahrungsmittelkonzentrat erzeugt werden soll, werden in der Regel lipide Haftvermittler eingesetzt, beispielsweise Fett oder Öl. Die lipiden Haftvermittler können entweder vor dem Granulieren zugegeben werden oder sie werden durch Erhitzen der zu granulierenden fetthaltigen Mischung erzeugt, indem in einem hohen Anteil vorhandener Oberflächen Fette verflüssigt werden. Die lipiden Substanzen fungieren in der Endanwendung, z.B. beim Einrühren des granulären Nahrungsmittelkonzentrats in kochendes Wasser, als Trennmittel für die Partikel, wodurch die Ausbildung der Viskosität verzögert wird und dadurch eine Klumpenbildung verhindert wird. Ein Granulierverfahren unter Zusatz von Öl als Haftvermittler ist in der WO 03/000076 A1 beschrieben.

In der EP 0 981 970 A1 ist ein Verfahren zur Herstellung von Brühwürfeln beschrieben, bei dem übliche Bestandteile gemischt werden und das Mischen durch kontinuierliches Einbringen der Bestandteile in einen Extruder durchgeführt wird, wobei ein Fettbestandteil bei einer Temperatur von 40-60°C eingeführt wird und das verarbeitete Gemisch zum Erhalt einer Kristallisation des Fetts im Gemisch bereits innerhalb des Extruders gekühlt wird und anschließend ein formstabiles Extrudat gebildet wird.

Die WO 98/20756 A offenbart ein trockenes Nahrungsmittel-Fertigprodukt mit einer einzelnen Glasübergangstemperatur sowie ein Extrusionsverfahren zu dessen Herstellung.

In der EP 0 954 985 A2 ist eine hydratisierbare granuläre Nahrungsmittelzusammensetzung beschrieben, die aus Granulatteilchen gebildet ist, die 2% bis 55% einer Fettkomponente aufweisen, die mit Bindemittel, das einen Emulgator umfaßt, beschichtet sind, eine Größenverteilung von etwa 1000 Mikrometer bis etwa 175 Mikrometer haben, wobei die Granulatteilchen hydrophobe und hydrophile Eigenschaften haben, wodurch die Granulatteilchen nicht dazu neigen Klumpen zu bilden, wenn kaltes oder Umgebungstemperatur aufweisendes Wasser oder Milch zugegeben werden.

Die Formgranulation unter Einsatz eines wäßrigen Haftvermittlers hat wiederum den Nachteil, daß zur Formstabilisierung eine starke Verdichtung erforderlich wäre, wodurch das granuläre Nahrungsmittelkonzentrat nicht mehr ausreichend rehydratisierbar ist, d.h. es kommt beim Mischen mit Wasser zur Klumpenbildung und es wird keine ausreichende Viskosität im gewünschten Endprodukt erzeugt. Für ein fettarmes Nahrungsmittelkonzentrat eignet sich die Formgranulation wegen des erforderlichen lipiden Haftvermittlers daher nicht. Des weiteren quellen stärkehaltige Produkte durch das zugesetzte Wasser auf und gequollene Stärke wird durch die mechanische Belastung bei der Formgranulation zumindest teilweise zerstört.

Aufgabe der vorliegenden Erfindung ist daher die Bereitstellung eines Verfahrens zur Herstellung eines Nahrungsmittelkonzentrats, das ohne den Zusatz lipider Haftvermittler auskommt und ein Nahrungsmittelkonzentrat liefert, das schnell und einfach in ein klumpenfreies Nahrungsmittelprodukt überführt werden kann.

Diese Aufgabe wird durch ein Verfahren zur Herstellung eines granulären Nahrungsmittelkonzentrats gelöst, das die folgenden Schritte umfaßt:
a) Mischen eines pulverförmigen Nahrungsmittelkonzentrats, das ein Bindemittel umfaßt und 1 - 20 Gew.% Öl und/oder Fett enthält, mit Wasser oder einer wäßrigen Zusammensetzung, wobei der Fettgehalt der wäßrigen Zusammensetzung unter 0,8 Gew.% liegt, bezogen auf die gesamte wäßrige Zusammensetzung, und das Wasser oder die wäßrige Zusammensetzung 2-20 Gew.% des pulverförmigen Nahrungsmittelkonzentrats ausmacht,
b) Extrudieren der Mischung,
c) Bilden von Granulatteilchen aus dem Extrudat und
d) Trocknen der Ganulatteilchen zu einem schüttbaren granulären Nahrungsmittelkonzentrat,
wobei die Temperatur des pulverförmigen Nahrungsmittelkonzentrats und des Extrudats in den Schritten a) und b) 35°C nicht überschreitet und das erhaltene granuläre Nahrungsmittelkonzentrat Pulverpartikel umfaßt, die aneinander haften und Zwischenräume ausbilden, wobei das Material zwischen den Pulverpartikeln (Zwischenräume) im Durchschnitt keinen höheren Fettanteil als das Nahrungsmittelkonzentrat aufweist.

Das erfindungsgemäße Verfahren hat unter anderem die Vorteile, daß kein Zusatz von Öl oder Fett für den Zusammenhalt der Pulverpartikel erforderlich ist und durch die niedrige Temperatur sowohl die Verfahrensführung vereinfacht als auch die Kosten reduziert werden. Mit Hilfe des erfindungsgemäßen Verfahrens ist ein granuläres Nahrungsmittelkonzentrat erhältlich, das sehr gut rehydratisierbar ist, d.h. es bildet beim Mischen mit Wasser besonders schnell ein im wesentlichen klumpenfreies, viskoses Nahrungsmittelprodukt, insbesondere eine gebundene Suppe oder eine Sauce.

Das pulverförmige Nahrungsmittelkonzentrat kann mit dem Fachmann bekannten Verfahren hergestellt werden, beispielsweise durch einen Misch- oder Mahlprozeß. Üblicherweise weist das pulverförmige Nahrungsmittelkonzentrat einen Wassergehalt von 1 - 18 Gew.-% auf, d.h. der Wasseranteil beträgt 1 - 18 Gew.-%, bezogen auf das gesamte pulverförmige Nahrungsmittelkonzentrat. Der Wasseranteil beträgt bevorzugt bei 2 - 14 Gew.-%, besonders bevorzugt 3 - 12 Gew.-%.

Der Öl- und/oder Fettgehalt des im erfindungsgemäßen Verfahren eingesetzten pulverförmigen Nahrungsmittelkonzentrats beträgt 1 - 20 Gew.-%, bezogen auf die Gesamtzusammensetzung. Bevorzugt enthält das eingesetzte pulverförmige Nahrungsmittelkonzentrat 1 - 18 Gew.-%, besonders bevorzugt 2 - 18 Gew.-% und noch weiter bevorzugt 2 - 15 Gew.-% Öl und/oder Fett.

Unter Ölen und Fetten werden alle im Nahrungsmittelkonzentrat enthaltenen natürlichen und synthetisch hergestellten Öle und Fette verstanden. Es eignen sich alle im Handel erhältliche Öle, Fette und Fettersatzstoffe, insbesondere in Pulverform, die sowohl als pulverförmige freie Fette (Pulverfette) vorliegen können als auch in eine Matrix eingebunden oder an einen Träger gebunden vorliegen können (Fettpulver). Es lassen sich Öle, pastenförmige Fette mit einem Schmelzpunkt von etwa 20 - 30°C, niederschmelzende Fette mit einem Schmelzpunkt von etwa 30 - 37°C, höherschmelzende Fette mit einem Schmelzpunkt von etwa 37 - 50°C und hochschmelzende Fette mit einem Schmelzpunkt von etwa 50 - 70°C einsetzen.

Die Einbindung von Ölen und Fetten in eine Matrix, d.h. die Verkapselung von lipiden Stoffen wird in den handelsüblichen Produkten dadurch erreicht, daß zusammen mit dem Hüllmaterial eine Emulsion erzeugt wird und diese dann einem Sprühtrocknungsprozeß unterzogen wird, d.h. das Wasser wird wieder abgetrocknet und das Hüllmaterial umschließt den lipiden Anteil. Im Gegensatz dazu wird bei der Bindung an einen Träger der lipide Stoff auf die innere Struktur des Trägermaterials aufgezogen oder an dessen Oberfläche gebunden. Typische Trägermaterialien sind agglomerierte Stärkehydrolysate, physikalisch modifizierte Stärken beispielsweise extrudierte Stärken die eine große innere Oberfläche aufweisen oder auch Mehle. Agglomerierte Stärkehydrolysate und physikalisch modifizierte Stärken sind gekennzeichnet durch ihr geringes Schüttgewicht, was ein indirektes Maß für die innere Oberfläche ist. Stark funktionelle Trägermaterialien haben ein Schüttgewicht von 100 - 200 g/l, beispielsweise Aeromyl, eine physikalisch modifizierte Stärke. Beispiele für in eine Matrix eingebundene Öle oder Fette sind handelsübliche Creamer, Milchaustauscher, Milchpulver, Sahnepulver, Weißmacher (Kaffeeweißer) und zerkleinerte Ölsaaten, z.B. Sojamehl. An einen Träger gebundene Öle oder Fette können beispielsweise auf Stärke, Mehl, Maltodextrin oder Stärkederivate aufgezogene Fette sein.

Die an eine Matrix oder in einer Matrix gebundenen Öle oder Fette können in dem erfindungsgemäßen Verfahren mit besonderem Vorteil eingesetzt werden, da sie kaum freies Fett erzeugen (ausölen), das als lipider Haftvermittler zwischen den Pulverpartikeln fungieren kann. Auf diese Weise wird die lockere, grobporige Struktur des nach dem Verfahren erhältlichen granulären Nahrungsmittelkonzentrats nicht beeinträchtigt und eine besonders gute Rehydratisierbarkeit erreicht. Die Verwendung von in eine Matrix eingebundenen Ölen oder Fetten ist insbesondere dann von Vorteil, wenn Öle, pastenförmige Fette und/oder niederschmelzende Fette zugesetzt werden, beispielsweise Sahnepulver, da dann ein Ausölen, das die Rehydratisierbarkeit negativ beeinflußt, besonders wirkungsvoll verhindert werden kann.

Wenn freie, d.h. nicht an oder in einer Matrix gebundene Fette eingesetzt werden, wird der Fettgehalt zweckmäßigerweise niedriger gewählt, bevorzugt enthält das pulverförmige Nahrungsmittelkonzentrat dann 1 - 12 Gew.-% Fett, bezogen auf die Gesamtzusammensetzung, besonders bevorzugt 1 - 8 Gew.-% Fett und noch weiter bevorzugt 1 - 4 Gew.-% Fett. Wenn freie Öle und/oder freie pastenförmige Fette eingesetzt werden, wird der Fettgehalt ebenfalls zweckmäßigerweise niedriger gewählt, bevorzugt enthält das pulverförmige Nahrungsmittelkonzentrat dann 1 - 3 Gew.-% freies Öl und/oder freies patenförmiges Fett, bezogen auf die Gesamtzusammensetzung, besonders bevorzugt 1 - 2 Gew.-% und noch weiter bevorzugt 1 Gew.-% freies Öl und/oder freies pastenförmiges Fett. Wenn freie niederschmelzende Fette eingesetzt werden, wird der Fettgehalt auch zweckmäßigerweise niedriger gewählt, bevorzugt enthält das pulverförmige Nahrungsmittelkonzentrat dann 1 - 6 Gew.-% niederschmelzendes Fett, bezogen auf die Gesamtzusammensetzung, besonders bevorzugt 1 - 4 Gew.-% und noch weiter bevorzugt 1 - 2 Gew.-% niederschmelzende Fett.

Die Temperatur des pulverförmigen Nahrungsmittelkonzentrats und des Extrudats in den Schritten a) und b) ist zweckmäßigerweise nicht höher als 35°C, da die Mischung bei höheren Temperaturen in den plastischen Bereich geraten kann und es so zu einer zu starken Verdichtung der Mischung im Extrusionsschritt kommt. Eine Folge einer zu hohen Verdichtung ist die schlechtere Rehydratisierbarkeit des hergestellten Nahrungsmittelkonzentrats, so daß sich beim Mischen mit Wasser Klumpen bilden. Höhere Temperaturen fördern die Plastifizierung der Mischung, unter anderem durch das An- und Aufschmelzen der Fette. Das An- und Aufschmelzen der Fette kann zusätzlich durch die Verwendung der oben genannten in eine Matrix eingebundenen (eingekapselten) oder an einen Träger gebundene Fette in dem pulverförmigen Nahrungsmittelkonzentrat unterdrückt werden. Bevorzugt beträgt die Temperatur des pulverförmigen Nahrungsmittelkonzentrats und des Extrudats in den Schritten a) und b) 15 - 30°C, besonders bevorzugt 18 - 28°C. Weiter ist es bevorzugt, auch unter Kostengesichtspunkten, den Prozeß bei Raumtemperatur zu führen, wobei die Temperatur des pulverförmigen Nahrungsmittelkonzentrats und des Extrudats in den Schritten a) und b) im Bereich von 18 - 25°C liegt.

Im Mischschritt a) werden 2 - 20 Gew.-%, bezogen auf das gesamte pulverförmige Nahrungsmittelkonzentrat, Wasser oder die wäßrige Zusammensetzung mit dem pulverförmigen Nahrungsmittelkonzentrat gemischt, wobei das Wasser oder die wäßrige Zusammensetzung auf die Pulverpartikel des Nahrungsmittelkonzentrats aufgebracht wird, die Oberfläche der Pulverpartikel benetzt und das Wasser oder die wäßrige Zusammensetzung in die Pulverpartikel eindringt. Bevorzugt beträgt die Menge des im Mischschritt a) eingesetzten Wassers oder der eingesetzten wäßrigen Zusammensetzung 2 - 18 Gew.-%, besonders bevorzugt 3 - 15 Gew.-% und noch weiter bevorzugt 4 - 12 Gew.-%, bezogen auf das pulverförmige Nahrungsmittelkonzentrat.

Um die spätere gute Rehydratisierbarkeit des nach dem erfindungsgemäßen Verfahren erhältlichen Nahrungsmittelkonzentrats zu gewährleisten, soll das Wasser oder die wäßrige Lösung die Pulverpartikel nicht vollständig durchfeuchten, d.h. die Pulverpartikel nicht vollständig durchdringen, sondern nur in den oberflächennahen Bereich eindringen. Ein Durchfeuchten der Pulverpartikel des Nahrungsmittelkonzentrats kann zur Folge haben, daß das Nahrungsmittelkonzentrat in dem anschließenden Extrusionsschritt b) (Granulierschritt) zu stark verdichtet wird und dann keine ausreichende Porosität für eine schnelle und klumpenfreie spätere Rehydratation des Endproduktes mehr besteht. Ferner wäre der Trocknungsaufwand ungleich höher, da tief eingedrungenes Wasser schwieriger auszutreiben ist. Durch das Befeuchten oder Anfeuchten der Pulverpartikel kommt es zum Anlösen der Partikeloberflächen, wodurch die Pulverpartikel im anschließenden Extrusionsschritt b) aneinander haften können. Die angelöste Partikeloberfläche stellt somit auch ein Bindemittel bereit.

Wenn im Mischschritt a) eine wäßrige Zusammensetzung eingesetzt wird, umfaßt die wäßrige Zusammensetzung bevorzugt einen Haftvermittler, der ein Bindemittel oder auch ein Zucker oder Gelatine sein kann. Bevorzugte Haftvermittler sind Stärke(n), Mehl(e), Hydrokolloid(e), Gummi Arabicum, Pektin(e), Stärkehydrolysat(e), Saccharose, Laktose oder Mischungen daraus. Die wäßrige Zusammensetzung kann in Form einer wäßrigen Lösung oder einer wäßrigen Suspension vorliegen. Der Haftvermittler in der wäßrigen Zusammensetzung unterstützt ab dem Extrusionsschritt b) die Haftung der Pulverpartikel des Nahrungsmittelkonzentrats.

Der im Schritt a) eingesetzten wäßrigen Zusammensetzung wird bevorzugt kein Öl und kein Fett zugesetzt, so daß sie lediglich Restfett aus dem gegebenenfalls in der wäßrigen Zusammensetzung enthaltenen Bindemittel enthalten kann. Bevorzugt liegt der Fettgehalt der wäßrigen Zusammensetzung unter 0,8 Gew.-%, besonders bevorzugt unter 0,5 Gew.-%, bezogen auf die gesamte wäßrige Zusammensetzung. Aufgrund des niedrigen Fettgehalts der im Schritt a) eingesetzten wäßrigen Zusammensetzung und des niedrigen Fettgehalts des eingesetzten pulverförmigen Nahrungsmittelkonzentrats wird die Haftung zwischen den Pulverpartikeln im wesentlichen nicht über Fettbrücken vermittelt, sondern vor allem über Kohlenhydrat-, Zucker-, Protein- und/oder Salzbrücken.

Zur Verbesserung der Benetzungseigenschaften kann dem Wasser oder der wäßrigen Zusammensetzung ein Emulgator zugesetzt werden, beispielsweise Lecithin. In der wäßrigen Zusammensetzung kann der Emulgator alternativ oder zusätzlich zu dem Bindemittel enthalten sein.

Das oben erläuterte, nicht vollständige Durchfeuchten der Pulverpartikel bzw. die geringe Eindringtiefe des Wassers oder der wäßrigen Zusammensetzung in die Pulverpartikel wird dadurch erreicht, daß im Mischschritt a) die oben angegebenen Mengen an Wasser oder wäßriger Zusammensetzung eingesetzt werden. Zusätzlich kann dem Wasser oder der wäßrigen Zusammensetzung in diesem Schritt nicht ausreichend Zeit gegeben werden, um weiter in die Pulverpartikel einzudringen.

Im zuletzt genannten Fall, daß dem Wasser oder der wäßrigen Lösung zusätzlich nicht ausreichend Zeit gegeben wird, um die Pulverpartikel weiter zu durchdringen, beträgt die Einwirkzeit im Mischschritt üblicherweise weniger als 5 Minuten, bevorzugt weniger als 2 Minuten, besonders bevorzugt weniger als 1 Minute und noch weiter bevorzugt weniger als 30 Sekunden.

Bei einer diskontinuierlichen oder halbkontinuierlichen Verfahrensführung, bei der der Mischschritt diskontinuierlich, d.h. batchweise erfolgt, beispielsweise durch Vermischen von pulverförmigem Nahrungsmittelkonzentrat und Wasser oder wäßriger Zusammensetzung in einem Kessel, beträgt die zeitliche Untergrenze für den Mischschritt in der Regel 20 Sekunden, da eine schnellere Verfahrensführung apparativ nicht möglich ist. Die Einwirkzeit des Wassers oder der wäßrigen Lösung in einem diskontinuierlich durchgeführten Mischschritt beträgt daher üblicherweise 20 Sekunden bis 5 Minuten, bevorzugt 30 Sekunden bis 3 Minuten. Mit Hilfe einer kontinuierlichen Verfahrensführung, beispielsweise dem Aufsprühen des Wassers oder der wäßrigen Zusammensetzung auf die Pulverpartikel des Nahrungsmittelkonzentrats kann die Einwirkzeit im Mischschritt gegenüber der diskontinuierlichen Verfahrensführung deutlich kürzer gehalten werden. Üblicherweise läßt man das Wasser oder die wäßrige Zusammensetzung auf die Pulverpartikel des Nahrungsmittelkonzentrats in diesem Fall im Mischschritt weniger als 1 Minute einwirken, bevorzugt weniger als 30 Sekunden, besonders bevorzugt weniger als 20 Sekunden und noch weiter bevorzugt weniger als 10 Sekunden.

Die oben angegebenen, längeren Einwirkzeiten sind insbesondere dann geeignet, wenn als wäßrige Zusammensetzung im Mischschritt a) hochkonzentrierte Lösungen eingesetzt werden, da diese mit geringerer Geschwindigkeit in die Pulverpartikel eindringen als es bei niedriger konzentrierten Lösungen oder Wasser der Fall ist.

Im Extrusionsschritt b) wird die angefeuchtete Mischung unter Druck durch eine Lochplatte, ein Gitter oder eine Düsenanordnung gepreßt und die Mischung so zu Strängen ausgeformt. Die Lochplatte kann ein oder mehrere Löcher (Aussparungen) aufweisen. Bevorzugt weist die Lochplatte eine Vielzahl von Aussparungen auf. Die Umfangsgestalt und die Anzahl der gebildeten Stränge läßt sich über die Form und die Anzahl der Aussparungen variieren. Bevorzugt sind die Aussparungen kreisförmig, oval oder viereckig.

Um eine gute Rehydratisierbarkeit des später getrockneten granulären Nahrungsmittelkonzentrats zu gewährleisten, sollte eine zu starke Verdichtung während des Extrusionsschritts b) vermieden werden. Die Verdichtung wird durch einen höheren Wasseranteil und einen höheren Druck gefördert. Ein vollständig durchfeuchtetes pulverförmiges Nahrungsmittelkonzentrat ist selbst bei einer Extrusion unter niedrigem Druck in der Regel bereits zu stark verdichtet, als daß noch eine gute Rehydratisierbarkeit erreichbar wäre. Die Extrusionsgeschwindigkeit, d.h. die Geschwindigkeit, mit der die Stränge extrudiert werden, beispielsweise aus der Lochplatte austreten, korreliert mit dem Druck und beträgt bevorzugt bis zu 30 cm/s, besonders bevorzugt 3 - 30 cm/s, noch weiter bevorzugt 5 - 20 cm/s und am meisten bevorzugt 6 - 18 cm/s.

Der Extrusionsschritt b) kann mit dem Fachmann bekannten Granulatoren, Feuchtgranulatoren oder Niederdruckextrusionsvorrichtungen durchgeführt werden.

Die Bildung von Granulatteilchen aus dem Extrudat im Schritt c) kann den Schritt umfassen, daß die extrudierten Stränge infolge ihrer lockeren Struktur durch ihr Eigengewicht abbrechen, wobei in der Regel Granulatteilchen mit einer Länge im Bereich von etwa 1 - 15 mm entstehen. Die Bildung der Granulatteilchen kann auch durch ein Rotieren der Lochplatte oder des Gitters im Extrusionsschritt unterstützt werden, wobei die Rotationsbewegung die Bildung der Granulatteilchen aus dem Extrudat fördert. Ebenso können andere mechanische Einwirkungen vorgesehen werden, um aus dem Extrudat Granulatteilchen zu bilden, beispielsweise ein Schneiden.

Im Anschluß an die Bildung der Granulatteilchen im Schritt c) werden die Granulatteilchen mit dem Fachmann bekannten Trocknungsverfahren getrocknet. Beispielsweise sind Lufttrocknungen, Trocknungen unter vermindertem Druck (Vakuumtrocknungen) oder Trocknungen unter Erwärmen möglich. Der Wassergehalt des getrockneten Produkts beträgt zweckmäßigerweise weniger als 12 Gew.-%, bezogen auf die Gesamtzusammensetzung, bevorzugt weniger als 10 Gew.-%, besonders bevorzugt weniger als 8 Gew.-% und noch weiter bevorzugt weniger als 5 Gew.-%.

Das im erfindungsgemäßen Verfahren eingesetzte pulverförmige Nahrungsmittelkonzentrat enthält ein Bindemittel, das nach der Rehydratisierung der hergestellten granulären Nahrungsmittelkonzentrats im hergestellten Nahrungsmittelprodukt die gewünschte Viskosität erzeugt. Das eingesetzte pulverförmige Nahrungsmittelkonzentrat enthält bevorzugt 1 - 98 Gew.-% Bindemittel, bezogen auf die Gesamtzusammensetzung, besonders bevorzugt 3 - 95 Gew.-% Bindemittel und noch weiter bevorzugt 5 - 90 Gew.-% Bindemittel. Weiter bevorzugt enthält das im erfindungsgemäßen Verfahren eingesetzte pulverförmige Nahrungsmittelkonzentrat 5 - 85 Gew.-% und am meisten bevorzugt 20 - 80 Gew.-% Bindemittel. Das Bindemittel kann eine Mischung aus mehreren Bindemitteln sein. Bevorzugte Bindemittel sind Stärke(n), Mehl(e), Hydrokolloid(e), Guarkernmehl, Pektin(e), Stärkehydrolysat(e) oder Mischungen daraus.

Zusätzlich zu Bindemittel, Öl und/oder Fett kann das in dem erfindungsgemäßen Verfahren eingesetzte pulverförmige Nahrungsmittelkonzentrat die folgenden Komponenten einzeln oder als Mischung umfassen:
- bis zu 60 Gew.-% Zucker, Zuckerarten, beispielsweise Saccharose oder Laktose,
- bis zu 60 Gew.-% Oligo- und/oder Polysaccharide, beispielsweise Inulin, Oligofructose oder Polydextrose,
- bis zu 60 Gew.-% Zuckeraustauschstoffe, Polyole, beispielsweise Sorbit, Maltit oder Mannit,
- bis zu 60 Gew.-% Salz (NaCl),
- bis zu 60 Gew.-% würzende und/oder geschmacksgebende Substanzen, beispielsweise Salze, Aromen, Lebensmittelextrakte, Kräuter, Gewürze, Geschmacksverstärker, Zusatzstoffe, z.B. Genußsäuren,
- bis zu 90 Gew.-% Gemüse, beispielsweise Karotte, Sellerie, Zwiebel,
- bis zu 60 Gew.-% Protein, Proteinderivate, beispielsweise Gelatine, Milcheiweiß, Molkereiweiß und/oder
- bis zu 15 Gew.-% färbende Bestandteile, beispielsweise Farbstoffe oder färbende Pflanzenauszüge.

Bevorzugt enthält das in den erfindungsgemäßen Verfahren eingesetzte pulverförmige Nahrungsmittelkonzentrat zusätzlich zu Bindemittel, Öl und/oder Fett bis zu 50 Gew.-% Salz, besonders bevorzugt bis zu 40 Gew.-% Salz, und noch weiter bevorzugt bis zu 30 Gew.-% Salz und/oder bis zu 50 Gew.-%, besonders bevorzugt bis zu 30 Gew.-% würzende und/oder geschmacksgebende Substanzen.

Unter dem Begriff granulär oder in Granulatform wird im Sinne der Erfindung eine Anhäufung von festen Teilchen (Granulatteilchen, Körner) verstanden, wobei die festen Teilchen im Durchschnitt größer als die Partikel eines Pulvers sind. Unter einem Pulver wird im Sinne der Erfindung eine Anhäufung von Körnern verstanden, die zu mehr als 80 % aus Partikeln mit einer Größe im Bereich von etwa 20 - 600 µm, bevorzugt 50 - 500 µm besteht. In der Regel liegt die durchschnittliche Teilchengröße eines Granulats oberhalb von 1 mm. Das nach dem erfindungsgemäßen Verfahren erhältliche Nahrungsmittelkonzentrat enthält in der Regel mehr als 60 Gew.-% Granulatteilchen, bezogen auf das gesamte Nahrungsmittelkonzentrat, bevorzugt mehr als 70 Gew.-%, besonders bevorzugt mehr als 75 Gew.-% Granulatteilchen, die eine Größe von mindestens 1 mm aufweisen. Die erhältlichen Granulatteilchen sind bevorzugt strangförmig ausgebildet, mit einer Länge von 1 - 15 mm und einer maximalen Ausdehnung quer zur Längsrichtung von 1 - 3 mm. Unter einer Strangform wird eine länglich ausgebildete Form verstanden, d.h. eine Form, bei der die Länge größer als die maximale Ausdehnung quer zur Längsrichtung ist. Beispielsweise kann bei einer maximalen Ausdehnung quer zur Längsrichtung von 1 mm die Länge 1,1 - 15 mm betragen und bei einer maximalen Ausdehnung quer zur Längsrichtung von 1 - 2 mm kann die Länge 2,1 - 15 mm betragen. Die Stränge können beispielsweise Zylinder sein, wobei die Querschnittsfläche des Strangs jede beliebige Form aufweisen kann, beispielsweise kann die Querschnittsfläche ein Kreis, ein Dreieck oder ein Viereck sein. Bei einem Strang in Form eines kreisförmigen Zylinders ist die Länge des Strangs die Höhe des Zylinders und die maximale Ausdehnung quer zur Länge ist der Durchmesser des Zylinders. Bei einer quadratischen Querschnittsfläche ist die maximale Ausdehnung quer zur Längsrichtung die Diagonale des Quadrats. Die Stränge können gerade oder gebogen sein. Bevorzugt beträgt die maximale Ausdehnung quer zur Längsrichtung 1 - 2,5 mm, besonders bevorzugt 1 - 2 mm. Die Länge beträgt bevorzugt 1 - 12 mm, besonders bevorzugt 2 - 10 mm und noch weiter bevorzugt 3-10 mm.

In einem weiteren Aspekt bezieht sich die Erfindung auf ein granuläres Nahrungsmittelkonzentrat, das nach dem erfindungsgemäßen Verfahren erhältlich ist.

Durch die Anwendung von niedrigen Drücken im Extrusionsschritt b) erfolgt eine nur geringe Verdichtung des Nahrungsmittelkonzentrats und das Produkt ist aufgrund seiner lockeren Struktur gut rehydratisierbar. Die geringe Verdichtung bewirkt, daß das erhaltene Nahrungsmittelkonzentrat insbesondere im Inneren eine hohe Porosität aufweist, d.h. insbesondere im Inneren relativ grobporig ist, wodurch das Wasser bei der späteren Anwendung zur Herstellung eines Nahrungsmittelprodukts, beispielsweise einer gebundenen Suppe, besser in das granuläre Nahrungsmittelkonzentrat eindringen kann.

Das nach dem erfindungsgemäßen Verfahren erhältliche Nahrungsmittelkonzentrat ist gut hydratisierbar (Instanteigenschaften). Es bildet bei der Zugabe von Wasser in der Regel innerhalb von 60 Sekunden, bevorzugt innerhalb von 30 Sekunden, besonders bevorzugt innerhalb von 15 Sekunden, eine im wesentlichen klumpenfreie Mischung aus, beispielsweise eine gebundene Suppe oder eine Sauce. Unter dem Begriff klumpenfrei wird im Sinne der Erfindung verstanden, daß keine mit bloßem Auge wahrnehmbaren Klumpen (Feststoffpartikel) in der durch Wasserzugabe erzeugten Mischung (Nahrungsmittelprodukt), insbesondere einer gebundenen Suppe oder einer Sauce, enthalten sind. Die Instanteigenschaften des nach dem erfindungsgemäßen Verfahren erhältlichen Nahrungsmittelkonzentrats werden unter anderem auf dessen poröse Struktur zurückgeführt, wodurch das Produkt eine geringe Schüttdichte hat. Die Schüttdichte liegt im Bereich von 330 - 630 g/l (Gramm pro Liter), besonders bevorzugt im Bereich von 350 - 600 g/l und noch weiter bevorzugt im Bereich von 370 - 580 g/l.

Das nach dem Verfahren erhältliche granuläre Nahrungsmittelkonzentrat ist schüttbar (rieselfähig). Gegenüber Agglomeraten des Standes der Technik weist es ferner den Vorteil auf, daß es weniger staubt, wodurch die Weiterverarbeitung und die Abfüllung erleichtert werden.

Der Wassergehalt des nach dem Verfahren erhältlichen Nahrungsmittelkonzentrats beträgt zweckmäßigerweise weniger als 12 Gew.%, bezogen auf die Gesamtzusammensetzung, bevorzugt weniger als 10 Gew.-%, besonders bevorzugt weniger als 8 Gew.-% und noch weiter bevorzugt weniger als 5 Gew.-%.

Das nach dem erfindungsgemäßen Verfahren erhältliche granuläre Nahrungsmittelkonzentrat umfaßt Pulverpartikel, die aneinander haften und Zwischenräume ausbilden, wobei das Material zwischen den Pulverpartikeln (Zwischenräume) im Durchschnitt keinen höheren Fettanteil als das Nahrungsmittelkonzentrat aufweist.

Im erfindungsgemäßen Verfahren wird zu dem im pulverförmigen Ausgangsmaterial enthaltenen Fett bevorzugt kein zusätzliches Öl oder Fett zugesetzt, insbesondere nicht in Form von freien Ölen oder Fetten, beispielsweise pulverförmigem freien Fett (Pulverfett) oder Pastenfett. Dadurch wird vermieden, daß die Haftung zwischen den Pulverpartikeln in einem zu großen Ausmaß durch Fette vermittelt wird. Bevorzugt wird die Haftung zwischen den Pulverpartikeln indem nach dem erfindungsgemäßen Verfahren erhältlichen Nahrungsmittelkonzentrat im wesentlichen durch Kohlenhydrat-, Zucker-, Protein- und/oder Salzbrücken verursacht. Eine Folge dessen ist die gute Rehydratisierbarkeit in kaltem Wasser, bevorzugt in Wasser mit einer Temperatur von 18 - 28°C, die bei Granulatteilchen oder Agglomeraten, deren Haftvermittlung vornehmlich durch Fette bereitgestellt wird, nicht gegeben ist, da die Fettbrücken in kaltem Wasser nicht aufbrechen. Bevorzugt lassen sich bis zu 400 g des nach dem Verfahren erhältlichen granulären Nahrungsmittelkonzentrats in 1 I Wasser mit einer Temperatur von 20°C, bevorzugt ohne oder mit wenig Rühren, innerhalb von 60 Sekunden, bevorzugt innerhalb von 30 Sekunden, besonders bevorzugt innerhalb von 15 Sekunden, klumpenfrei dispergieren.

Wie oben erläutert, erzeugt das oder die Bindemittel bei der Zugabe von Wasser zu dem granulären Nahrungsmittelkonzentrat die gewünschte Viskosität. Durch die Zugabe von Wasser und/oder Milch ist innerhalb von etwa 120 Sekunden, bevorzugt innerhalb von 60 Sekunden, besonders bevorzugt innerhalb von 30 Sekunden, besonders bevorzugt innerhalb von 15 Sekunden, das fertige Nahrungsmittelprodukt, beispielsweise eine gebundene Suppe oder Sauce, in Form einer Flüssigkeit erhältlich, die eine Viskosität im Bereich von 1000 - 5000 Centipoise (mPa s) aufweist.

Weiter bezieht sich die Erfindung auf die Verwendung des Nahrungsmittelkonzentrats zur Herstellung eines Nahrungsmittelprodukts, insbesondere eines viskosen Nahrungsmittelprodukts, beispielsweise einer gebundenen Suppe oder einer Sauce. Die Sauce kann eine Sauce für ein Fertiggericht sein, beispielsweise eine Pastasauce, oder eine Sauce für ein Fixgericht, beispielsweise Fix für Gulasch oder Fix für Kartoffelgratin. Zur Herstellung des Nahrungsmittelprodukts wird eine Flüssigkeit, bevorzugt Wasser und/oder Milch, mit dem granulären Nahrungsmittelkonzentrat der Erfindung gemischt und es entsteht ein nahezu oder vollständig klumpenfreies Nahrungsmittelprodukt, bevorzugt ohne oder mit wenig Rühren und bevorzugt mit einer Viskosität von 1000 - 5000 Centipoise. Dabei ist eine gute Rehydratisierbarkeit sowohl bei der Heißanwendung als auch bei der Kaltanwendung gegeben. Während bei der Heißanwendung bevorzugt Wasser mit einer Temperatur von etwa 60 - 100°C eingesetzt wird, verwendet man bei der Kaltanwendung bevorzugt Wasser mit einer Temperatur von etwa 15 - 30°C.

Die Erfindung bezieht sich auch auf eine Nahrungsmittelzusammensetzung, die das nach dem erfindungsgemäßen Verfahren erhältliche granuläre Nahrungsmittelkonzentrat umfaßt. Die Nahrungsmittelzusammensetzung kann weitere Nahrungsmittelkomponenten enthalten, beispielsweise Gemüse, Fleischstücke, Pilze oder ähnliches.

Das nachfolgende Beispiel erläutert die Erfindung.

### Helle Sauce

Zusammensetzung:

| | |
|---|---|
| Mehl | 31 % |
| Magermilchpulver | 20 % |
| Fettpulver (Burolac) | 16 % |
| Stärke | 14 % |
| Salz | 10 % |
| Geschmacksverstärker | 3,5 % |
| Gemüse (Lauch, Zwiebel) | 3 % |
| Aroma/ Extrakte/ Gewürze | 2,5 % |

Eine pulverförmige Mischung mit der oben angegebenen Zusammensetzung wurde einem Fließbett zugeführt und beim Durchlaufen (Verweilzeit ca. 12 Sekunden) mit Wasser besprüht (Dosierung 8 %). Direkt danach wurde das befeuchtete Gut einem Niederdruckextrusionsschritt unterzogen. Es resultierten Granulate mit einem Durchmesser von ca. 1,5 mm und einer Länge zwischen 2 und 10 mm. Anschließend wurde das Granulat auf eine Endfeuchte < 5 % getrocknet. Das Produkt wird in kochendes Wasser gegeben und bildete dabei eine klumpenfreie helle Sauce aus. Das Dispergieren des Produktes in kaltem Wasser und anschließendes Erhitzen lieferte ebenfalls eine klumpenfreie helle Sauce.

## Patentansprüche

1. Verfahren zur Herstellung eines granulären Nahrungsmittelkonzentrats, **dadurch gekennzeichnet, daß** das Verfahren die folgenden Schritte umfaßt:
a) Mischen eines pulverförmigen Nahrungsmittelkonzentrats, das ein Bindemittel umfaßt und 1 - 20 Gew.-% Öl, und/oder Fett enthält, mit Wasser oder einer wäßrigen Zusammensetzung, wobei der Fettgehalt der wäßrigen Zusammensetzung unter 0,8 Gew.-% liegt, bezogen auf die gesamte wäßrige Zusammensetzung, und das Wasser oder die wäßrige Zusammensetzung 2-20 Gew.% des pulverförmigen Nahrungsmittelkonzentrats ausmacht,
b) Extrudieren der Mischung,
c) Bilden von Granulatteilchen aus dem Extrudat und
d) Trocknen der Granulatteilchen zu einem schüttbaren granulären Nahrungsmittelkonzentrat,
wobei die Temperatur des pulverförmigen Nahrungsmittelkonzentrats und des Extrudats in den Schritten a) und b) 35°C nicht überschreitet und das erhaltene granuläre Nahrungsmittelkonzentrat Pulverpartikel umfaßt, die aneinander haften und Zwischenräume ausbilden, wobei das Material zwischen den Pulverpartikeln (Zwischenräume) im Durchschnitt keinen höheren Fettanteil als das Nahrungsmittelkonzentrat aufweist

2. Verfahren nach Anspruch 1, **dadurch gekennzeichnet, daß** die Temperatur 18 - 28°C beträgt.

3. Verfahren nach Anspruch 1 oder 2, **dadurch gekennzeichnet, daß** die Mischung mit einer Geschwindigkeit von bis zu 30 cm/s extrudiert wird.

4. Verfahren nach einem der Ansprüche 1 bis 3, **dadurch gekennzeichnet, daß** das Wasser oder die wäßrige Zusammensetzung im Schritt a) 2-18 Gew.-% des pulverförmigen Nahrungsmittelkonzentrats ausmacht.

5. Verfahren nach einem der Ansprüche 1 bis 4, **dadurch gekennzeichnet, daß** das Wasser oder die wäßrige Zusammensetzung im Schritt a) 4 -12 Gew.-% des pulverförmigen Nahrungsmittelkonzentrats ausmacht.

6. Verfahren nach einem der Ansprüche 1 bis 5, **dadurch gekennzeichnet, daß** im Schritt a) eine wäßrige Zusammensetzung eingesetzt wird, die einen Haftvermittler enthält.

7. Verfahren nach einem der Ansprüche 1 bis 6, **dadurch gekennzeichnet, daß** das pulverförmige Nahrungsmittelkonzentrat 2 -18 Gew.-% Öl und/oder Fett enthält

8. Verfahren nach einem der Ansprüche 1 bis 7, **dadurch gekennzeichnet, daß** das granuläre Nahrungsmittelkonzentrat nach dem Trocknen weniger als 8 Gew.-% Wasser enthält.

9. Verfahren nach einem der Ansprüche 1 bis 8, **dadurch gekennzeichnet, daß** das nach dem Trocknungsschritt erhaltene Nahrungsmittelkonzentrat mehr als 60 Gew.% Granulatteilchen umfaßt, die strangförmig ausgebildet sind und eine Länge von 2,1 - 15 mm sowie eine maximale Ausdehnung quer zur Längsrichtung von 1 - 2 mm aufweisen.

10. Granuläres Nahrungsmittelkonzentrat, erhältlich nach einem Verfahren gemäß einem der Ansprüche 1 bis 9, wobei die Schüttdichte des granulären Nahrungsmittelkonzentrats im Bereich von 330 - 630 g/l liegt und das granuläre Nahrungsmittelkonzentrat Pulverpartikel umfaßt, die aneinander haften und Zwischenräume ausbilden, wobei das Material zwischen den Pulverpartikeln (Zwischenräume) im Durchschnitt keinen höheren Fettanteil als das Nahrungsmittelkonzentrat aufweist.

11. Verwendung eines Nahrungsmittelkonzentrats nach Anspruch 10 zur Herstellung eines Nahrungsmittelprodukts.

12. Verwendung nach Anspruch 11, **dadurch gekennzeichnet, daß** das Nahrungsmittelprodukt eine gebundene Suppe oder eine Sauce ist.

13. Nahrungsmittelzusammensetzung, umfassend ein granuläres Nahrungsmittelkonzentrat nach Anspruch 10.

## Claims

1. Method for producing a granular food concentrate, **characterized in that** the method comprises the following steps:
a) mixing a powdery food concentrate which comprises a binder and contains 1-20 wt.-% oil and/or fat with water or an aqueous composition, wherein the fat content of the aqueous composition is less than 0.8 wt.-% in relation to the entire aqueous composition, and the water or the aqueous composition constitutes 2-20 wt.-% of the powdery food concentrate,
b) extruding the mixture,
c) forming granulate particles from the extrudate and
d) drying the granulate particles to form a pourable granular food concentrate,
wherein the temperature of the powdery food concentrate and of the extrudate in steps a) and b) does not exceed 35°C and wherein the obtained granular food concentrate comprises powder particles, which adhere to one another and form interstices, wherein, on average, the material between the powder particles (interstices) does not contain a higher fat proportion than the food concentrate.

2. Method according to claim 1, **characterized in that** the temperature is 18 - 28 °C.

3. Method according to claim 1 or 2, **characterized in that** the mixture is extruded at a rate of up to 30 cm/s.

4. Method according to any of claims 1 to 3, **characterized in that** the water of the aqueous composition in step a) constitutes 2 - 18 wt.-% of the powdery food concentrate.

5. Method according to any of claims 1 to 4, **characterized in that** the water or the aqueous composition in step a) constitutes 4 - 12 wt.-% of the powdery food concentrate.

6. Method according to any of claims 1 to 5, **characterized in that** in step a) an aqueous composition is used which contains an adhesion promoter.

7. Method according to any of claims 1 to 6, **characterized in that** the powdery food concentrate contains 2 - 18 wt.-% oil and/or fat.

8. Method according to any of claims 1 to 7, **characterized in that** after drying, the granular food concentrate contains less than 8 wt.-% water.

9. Method according to any of claims 1 to 8, **characterized in that** the food concentrate, obtained after the drying step, comprises more than 60 wt.-% granular particles which are formed as strands and are 2.1 - 15 mm long and have a maximum extension transverse to the longitudinal direction of 1 - 2 mm.

10. Granular food concentrate, obtainable by the method according to any of claims 1 to 9, wherein the granular food concentrate has a bulk density of 330 - 630 g/l and the granular food concentrate comprises powder particles, which adhere to one another and form interstices, wherein, on average, the material between the powder particles (interstices) does not contain a higher fat proportion than the food concentrate.

11. Use of a food concentrate according to claim 10 for producing a food product.

12. Use according to claim 11, **characterized in that** the food product is a thickened soup or a sauce.

13. Food composition, comprising a granular food concentrate according to claim 10.

## Revendications

1. Procédé de préparation d'un concentré alimentaire granulé, **caractérisé en ce que** le procédé comprend les étapes suivantes :
a) mélangeage d'un concentré alimentaire pulvérulent, qui comporte un liant et 1 à 20 % en poids d'huile et/ou de graisse, avec de l'eau ou une composition aqueuse, la teneur en graisse de la composition aqueuse étant en dessous de 0,8 % en poids, rapporté à l'ensemble de la composition aqueuse et l'eau ou la composition aqueuse constituant 2 à 20 % en poids du concentré alimentaire pulvérulent,
b) extrusion du mélange
c) formation de particules de granulé à partir du boudin extrudé et
d) séchage des particules granulées pour donner un concentré alimentaire granulé manipulable en vrac,
la température du concentré alimentaire pulvérulent et du boudin extrudé dans les étapes a) et b) ne dépassant pas 35 °C et le concentré alimentaire granulé comprenant des particules de poudre qui adhèrent les unes aux autres et forment des interstices entre elles, le matériau entre les particules de poudre (interstices) ne présentant pas en moyenne une proportion de graisse plus élevée que le concentré alimentaire.

2. Procédé selon la revendication 1, **caractérisé en ce que** la température est de 18 à 28 °C.

3. Procédé selon la revendication 1 ou 2, **caractérisé en ce que** le mélange est extrudé à une vitesse de 30 cm/s.

4. Procédé selon l'une quelconque des revendications 1 à 3, **caractérisé en ce que** l'eau ou la composition aqueuse à l'étape a) constitue 4 à 12 % en poids du concentré alimentaire pulvérulent.

5. Procédé selon l'une quelconque des revendications 1 à 4, **caractérisé en ce que** l'eau ou la composition aqueuse à l'étape a) constitue 2 à 18 % en poids du concentré alimentaire pulvérulent.

6. Procédé selon l'une quelconque des revendications 1 à 5, **caractérisé en ce qu'**à l'étape a) est utilisée une composition aqueuse qui contient un promoteur d'adhérence.

7. Procédé selon l'une quelconque des revendications 1 à 6, **caractérisé en ce que** le concentré alimentaire pulvérulent contient 2 à 18 % en poids d'huile et/ou de graisse.

8. Procédé selon l'une quelconque des revendications 1 à 7, **caractérisé en ce qu'**après le séchage, le concentré alimentaire granulé contient moins de 8 % en poids d'eau.

9. Procédé selon l'une quelconque des revendications 1 à 8, **caractérisé en ce que** le concentré alimentaire obtenu après l'étape de séchage comporte plus de 60 % en poids de particules de granulé qui ont une forme de boudin et présentent une longueur de 2,1 à 15 mm ainsi qu'une extension maximale transversalement par rapport à la direction longitudinale de 1 à 2 mm.

10. Concentré alimentaire pouvant être obtenu moyennant un procédé selon l'une quelconque des revendications 1 à 9, la densité en vrac du concentré alimentaire granulé se trouvant dans l'intervalle de 330 à 630 g/l et le concentré alimentaire granulé comprenant des particules de poudre qui adhèrent les unes aux autres et forment des interstices, le matériau entre les particules de poudre (interstices) ne présentant pas en moyenne une proportion de graisse plus élevée que le concentré alimentaire.

11. Utilisation d'un concentré alimentaire selon la revendication 10 à la préparation d'un produit alimentaire.

12. Utilisation selon la revendication 11, **caractérisée en ce que** le produit alimentaire est une soupe liée ou une sauce.

13. Composition de concentré alimentaire comprenant un concentré alimentaire selon la revendication 10.
